## Europäisches Patentamt

## European Patent Office

## Office européen des brevets

(19)

(11) Veröffentlichungsnummer: **0 085 939**
**B1**

(12)

# EUROPÄISCHE PATENTSCHRIFT

(45) Veröffentlichungstag der Patentschrift:
12.06.85

(21) Anmeldenummer: 83100977.4

(22) Anmeldetag: 02.02.83

(51) Int. Cl.⁴: **A 01 K 1/015**, A 01 K 23/00,
C 04 B 41/50, C 09 K 3/32,
B 01 J 2/00

(54) Mittel zur Bindung und Sanierung von tierischen Schlackenprodukten sowie Verfahren zur Herstellung des Mittels.

(30) Priorität: 04.02.82 DE 3203680

(43) Veröffentlichungstag der Anmeldung:
17.08.83 Patentblatt 83/33

(45) Bekanntmachung des Hinweises auf die Patenterteilung:
12.06.85 Patentblatt 85/24

(84) Benannte Vertragsstaaten:
AT BE CH DE FR GB LI LU NL

(56) Entgegenhaltungen:
DE - A - 1 813 881
DE - A - 2 338 887
DE - A - 2 640 341
DE - A - 2 930 060

(73) Patentinhaber: YTONG AG, Hornstrasse 3,
D-8000 München 40 (DE)

(72) Erfinder: Bannasch, Ulrich, Blumenstrasse 5,
D-8034 Germering (DE)
Erfinder: Denk, Uta, Feldbergstrasse 5, D-7890 Tiengen (DE)
Erfinder: Harder, Hermann, Ringstrasse 7,
D-8064 Altomünster (DE)
Erfinder: Lippe, Klaus F., Lenbachstrasse 16,
D-8899 Aresing (DE)

(74) Vertreter: Patentanwälte Dr. Solf & Zapf, Asamstrasse 8,
D-8000 München 90 (DE)

## Beschreibung

Die Erfindung betrifft ein Mittel zur Bindung und Sanierung von tierischen, biologisch ausgesonderten Schlackenprodukten, bestehend aus einem Mineralstoffgemisch, hergestellt durch Mischung eines Bindemittels aus Kalk und/oder Zement mit einer $SiO_2$-enthaltenden reaktionsfähigen Komponente und ggf. einem Treib- und/oder Schäummittel, ggf. hydrothermale Härtung des Gemisches und Zerkleinerung des erhärteten Produktes, wobei das Mittel ein Gemisch ist, das im wesentlichen aus Gips und Mineralstoffgemisch besteht. Ein solches Mittel ist aus DE-A Nr. 2930060 bekannt.

Das bekannte Produkt hat sich bewährt. Als Mineralstoffgemisch kommen ausser Gasbeton auch Produkte gemäss DE-A Nrn. 2902079, 2902101, hergestellt z. B. gemäss DE-A Nr. 2832194, in Frage, Nachteilig bei diesen bekannten Produkten ist, dass ein Teil der aufgesaugten Stoffe z. B. durch Wärmeeinwirkung zu schnell wieder freigesetzt wird.

Die Wirkung des Mineralstoffgemisches besteht im wesentlichen in der hohen Adsorptionsfähigkeit gegenüber flüssigen Phasen und wegen des relativ hohen pH-Wertes in der Neutralisierung von Säuren, im Abtöten von Bakterien und in der Behinderung der Entwicklung von Bakterien, ferner in einer zumindest teilweisen Geruchsminderung.

Die Wirkung des Gipses wird z. B. in der DE-C Nr. 868912 beschrieben. Demnach besitzt der Gips die Fähigkeit, Ammoniak und andere gasförmige übelriechende Stoffe chemisch und/oder adsorbtiv zu binden.

Aufgabe der Erfindung ist, ein Produkt aus Gips und Calciumsilikathydrat aufweisenden Mineralstoffkörnern so zu konditionieren, dass die Wirkung der beiden Stoffe optimiert und die Freisetzung der aufgesaugten Stoffe erschwert wird.

Diese Aufgabe wird bei dem eingangs beschriebene Mittel dadurch gelöst, dass es aus Mineralstoffkörnern besteht, die von einer Gipshülle umgeben sind.

Die Calciumsilikathydrat aufweisenden, vorzugsweise im wesentlichen aus Calciumsilikathydraten bestehenden Mineralstoffkörner, insbesondere im Kornbereich von 0,5 bis 8, vorzugsweise 1,5 bis 6,0 mm, weisen bekanntermassen Mikroporen auf, die das hohe Adsorptionsvermögen gegenüber Flüssigkeiten bedingen. Durch bei der Herstellung verwendete Treib- und/oder Schäummittel bedingte Makroporen wird das Adsorptionsvermögen erhöht. Es lag nun keineswegs nahe, die Mineralstoffkörner mit einer erhärteten Gipsschicht zu umhüllen, weil befürchtet werden musste, dass dadurch das Adsorptionsvermögen gegenüber Flüssigkeiten bzw. die Adsorptionsfähigkeit beeinträchtig würde. Es hat sich jedoch herausgestellt, dass das Adsorptionsvermögen nicht geändert wird, dass vielmehr in überraschender Weise die aufgesaugten Stoffe nicht so leicht wieder freigesetzt werden wie bei den bekannten Produkten. Offenbar bildet die Gipshülle eine Sperrzone für den Austritt des im Innern des Korns befindlichen aufgesaugten Stoffes, nicht jedoch für das Eindringen, das nahezu ungehindert erfolgt. Woraus diese richtungsabhängige, semipermeable Wirkung der Gipsschicht resultiert, ist derzeit noch nicht bekannt. Neben der Sperrwirkung entfaltet die Gipshülle die bekannten Fähigkeiten des Gipses weitaus besser als in bekannten Produkten, weil offenbar der Gips in Form einer zusammenhängenden, mineralisch reinen Schicht auf dem Mineralstoffkorn angeordnet ist und nicht — wie üblich — in einem feinteiligen Gemisch mit anderen Produkten vorliegt.

Vorteilhaft ist, dass die Gipshülle eine relativ gerundete Oberfläche bildet im Vergleich zum Mineralstoffkorn, das herstellungsbedingt nach dem Zerkleinern scharfkantig ist. Die gerundete Oberfläche bedingt eine leichtere Handhabung (Rieselfähigkeit) der Körner und weniger Abrieb. Man hat beobachtet, dass die Tiere mit runden Körnern gefüllte Plätze bevorzugen gegenüber mit eckigen Körnern gefüllten. Die eckigen Körner verhaken sich ausserdem im Fell der Tiere und werden auf diese Weise verstreut. Dem runden erfindungsgemässen Korn haftet dieser Nachteil ebenfalls nicht an.

Nach einer besonderen Ausführungsform der Erfindung wird das Mittel hergestellt, indem das gebrochene Granulat aus dem Mineralstoff, vorzugsweise aus Gasbeton, mit 20 bis 70 Gew.-% Wasser befeuchtet und anschliessend mit einem trockenen, pulverförmigen Gipshalbhydrat, vorzugsweise α-Halbhydrat, vermengt wird. Zweckmässigerweise erfolgt das Mischen auf einem Pelletierteller, so dass gerundete Pellets entstehen. Der Wassergehalt der verwendeten Mineralstoffkörner im Kornbereich von 0,5 bis 8 mm sollte zwischen 50 und 70 Gew.-% liegen. Die Zugabemenge des Wassers richtet sich nach dem Wassergehalt des Ausgangsproduktes. Wird ein Calciumsilikathydrat aufweisendes Mineralstoffgemisch mit z. B. Autoklavfeuchte (etwa 30 Gew.-% $H_2O$) verwendet, braucht weniger Wasser zugegeben zu werden als bei Verwendung eines Produkts mit einer Ausgleichsfeuchte von 3 Gew.-%. Halbhydrat wird in einer Menge von 50 bis 80 Gew.-%, bezogen auf das trockene Mineralstoffkorn (3 Gew.-% Ausgleichsfeuchte bei Raumtemperatur), verwendet. Es wird beim Pelletieren vorzugsweise eine Schicht gebildet, die im Mittel eine Dicke von 0,1 bis 0,5 mm aufweist. Beim Umhüllen der Mineralstoffkörner mit trockenem, pulverförmigem Gipshalbhydrat werden die oberflächlich angeordneten Löcher, z. B. Makroporen, ausgefüllt, und es bildet sich dann eine gleichmässige, feuchte Gipsschicht, die nach der Entnahme der Pellets vom Pelletierteller unter Bildung von Gipsdihydrat aushärtet, wozu ausreichend Wasser zur Verfügung steht. Die gehärtete Hülle aus Gips ummantelt das Mineralstoffkorn vollständig, unterbricht die Kapillaren des Mineralstoffkorns und weist eine eigene Kapillarität auf. Wird z. B ein Gasbetongranulat als Mineralstoffkorn verwendet mit einer Schüttdichte von etwa 0,35 $g/cm^3$, so erhöht sich die Schüttdichte aufgrund der Ummantelung auf 0,45 bis 0,5 g/cm³, wobei die Adsorptionskapazität erhalten bleibt und sich die beschriebenen Vorteile einstellen.

Vorteilhaft ist, während des Beschichtens oder nach dem Beschichten auf dem Pelletierteller die Pellets mit Wasser zu besprühen, was die Erhärtung der Hülle fördert. Die Erhärtung wird zweckmässigerweise zudem beschleunigt, wenn dem Sprühwasser ein an sich bekannter Gipsabbindebeschleuniger zugesetzt wird. Sofern der Feuchtigkeitsgehalt der Pellets nach dem Abbinden des Gipses zu hoch sein sollte, kann sich eine Trocknung anschliessen. Eine Trocknung ist jedoch in der Regel nicht erforderlich, weil das Halbhydrat zum Abbinden Feuchtigkeit aus dem Mineralstoffkorn entzieht und die Wärmeentwicklung des Abbindevorganges zudem Feuchtigkeit aus dem Korn verdrängt.

Die Ummantelung mit abgebundenem Gips eröffnet in vorteilhafter Weise weitere Möglichkeiten, dem Tierstreumittel ohne grossen Aufwand zusätzliche Eigenschaften zu verleihen. Es können dem Gipspulver und/oder dem Sprühwasser Farbmittel, Indikatoren, weitere Geruchsinhibitoren (z. B. Eisen(III)sulfat) zugesetzt werden, die in die verfestigte Hülle eingebaut werden und die Wirkung des neuen Mittels erhöhen bzw. dem Mittel ein ästhetisch höherwertiges Aussehen verleihen.

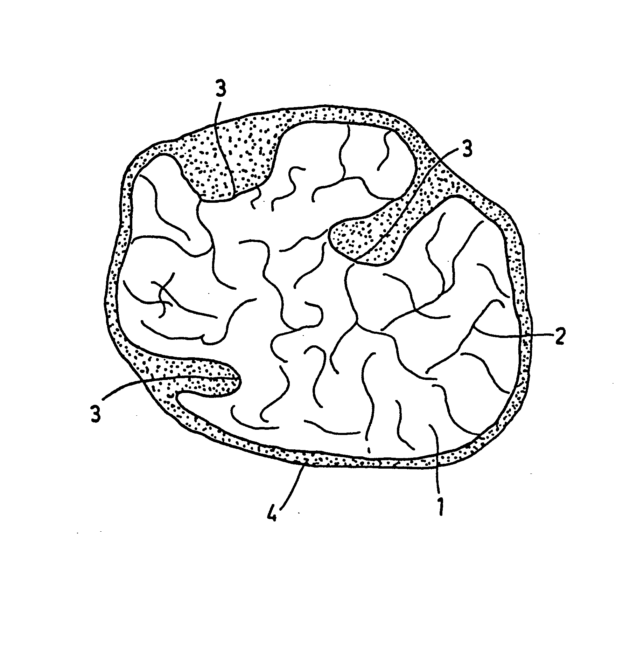

Anhand der Zeichnung wird die Erfindung näher erläutert. Es ist schematisch ein Gasbetonkorn 1 im Schnitt abgebildet, das Makroporen 2 und Mikroporen 3 aufweist. Das Korn 1 ist mit einer Gipsschicht 4 ummantelt, wobei die Poren 3 mit Gips ausgefüllt sind.

**Patentansprüche**

1. Mittel zur Bindung und Sanierung von tierischen, biologisch ausgesonderten Schlackenprodukten, bestehend aus einem Mineralstoffgemisch, herstellbar durch Mischung eines Bindemittels aus Kalk und/oder Zement mit einer SiO₂-enthaltenden reaktionsfähigen Komponente und ggf. einem Treib- und/oder Schäummittel, ggf. hydrothermale Härtung des Gemisches und Zerkleinerung des erhärteten Produktes, wobei das Mittel ein Gemisch ist, das im wesentlichen aus Gips und Mineralstoffgemisch besteht, dadurch gekennzeichnet, dass es aus Mineralstoffkörnern besteht, die von einer Gipshülle umgeben sind.

2. Mittel nach Anspruch 1, dadurch gekennzeichnet, dass die Mineralstoffkörner Korngrössen im Korngrössenbereich von 0,5 bis 8, vorzugsweise 1,5 bis 6,0 mm, aufweisen und die Gipshülle im Mittel eine Dicke von 0,1 bis 0,5 mm hat.

3. Mittel nach den Ansprüchen 1 und/oder 2, dadurch gekennzeichnet, dass die Mineralstoffkörner Mikro- und Makroporen aufweisen.

4. Mittel nach einem oder mehreren der Ansprüche 1 bis 3, dadurch gekennzeichnet, dass die Gipsschicht Farbmittel und/oder Indikatoren und/oder Geruchsinhibitoren enthält.

5. Verfahren zur Herstellung eines Mittels gemäss den Ansprüchen 1 bis 4, dadurch gekennzeichnet, dass ein gebrochenes Granulat aus Mineralstoff, vorzugsweise aus Gasbeton, mit Wasser befeuchtet wird, so dass es 50 bis 70 Gew.-% Wasser aufweist und anschliessend mit einem trockenen, pulverförmigen Gipshalbhydrat, vorzugsweise α-Halbhydrat, vermengt wird.

6. Verfahren nach Anspruch 5, dadurch gekennzeichnet, dass das Mischen auf einem Pelletierteller erfolgt.

7. Verfahren nach den Ansprüchen 5 und/oder 6, dadurch gekennzeichnet, dass Mineralstoffkörner im Kornbereich von 0,5 bis 8 mm verwendet werden.

8. Verfahren nach einem oder mehreren der Ansprüche 5 bis 7, dadurch gekennzeichnet, dass Halbhydrat in einer Menge von 50 bis 80 Gew.-%, bezogen auf die trockenen Mineralstoffkörner, verwendet wird.

9. Verfahren nach einem oder mehreren der Ansprüche 5 bis 8, dadurch gekennzeichnet, dass das Pelletieren so lange durchgeführt wird, bis das Mineralstoffkorn mit einer Gipsschicht von 0,1 bis 0,5 mm ummantelt ist.

10. Verfahren nach einem oder mehreren der Ansprüche 5 bis 9, dadurch gekennzeichnet, dass nach dem Pelletieren getrocknet wird.

11. Verfahren nach einem oder mehreren der Ansprüche 5 bis 10, dadurch gekennzeichnet, dass während des Pelletierens die Mischung mit Wasser besprüht wird.

12. Verfahren nach Anspruch 11, dadurch gekennzeichnet, dass dem Sprühwasser ein an sich bekannter Gipsabbindebeschleuniger zugesetzt wird.

13. Verfahren nach einem oder mehreren der Ansprüche 5 bis 12, dadurch gekennzeichnet, dass dem Gipspulver und/oder dem Sprühwasser Farbmittel und/oder Indikatoren und/oder weitere Geruchsinhibitoren zugesetzt werden.

**Claims**

1. An agent for the binding and reconstitution of biologically excreted animal waste products, consisting of a mineral material mixture which is produced by mixing a binding agent made of lime and/or cement with a reactive ingredient containing SiO₂ and, if necessary, a motive substance and/or foaming agent, if necessary by hydrothermal hardening of the mixture and crushing of the hardened product, wherein the agent is a mixture consisting essentially of gypsum and mixed mineral material, characterised in that the agent consists of granules of mineral material that are enclosed in a gypsum shell.

2. An agent according to Claim 1, characterised in that the granules of mineral material have dimensions in the range of 0.5 to 8 mm, preferably of 1.5 to 6 mm, and the gypsum shell in the agent has a thickness of 0.1 to 0.5 mm.

3. An agent according to Claims 1 and/or 2, characterised in that the granules of mineral material have micropores and macropores.

4. An agent according to one or more of Claims 1 to 3, characterised in that the gypsum shell contains colouring matter and/or indicators and/or deodorants.

5. A process for the production of an agent according to one of Claims 1 to 4, characterised in that a broken granulate made of mineral material, preferably made of aerated cement, is moistened with water, so that it exhibits 50 to 70% of water by weight, and is then mixed with a dry, pulverised gypsum hemihydrate, preferably α-hemihydrate.

6. A process according to Claim 5, characterised in that the mixing takes place on a pelletising plate.

7. A process according to Claims 5 and/or 6, characterised in that granules of mineral material in the dimension range of 0.5 to 8 mm are used.

8. A process according to one or more of Claims 5 to 7, characterised in that hemihydrate in the quantity of 50 to 80% by weight relative to the dry granules of mineral material is used.

9. A process according to one or more of Claims 5 to 8, characterised in that the pelletising is carried on until such time as the mineral material granule is coated with a gypsum layer of 0.1 to 0.5 mm.

10. A process according to one or more of Claims 5 to 9, characterised in that, after pelletising, drying is carried out.

11. A process according to one or more of Claims 5 to 10, characterised in that during pelletising the mixture is sprayed with water.

12. A process according to Claim 11, characterised in that an agent to accelerate the setting of gypsum, known *per se*, is added to the spraying water.

13. A process according to one or more of Claims 5 to 12, characterised in that colouring matter and/or indicators and/or further deodorants are added to the gypsum powder and/or the spraying water.

**Revendications**

1. Agent pour la liaison et la réorganisation de produits de scories animales, séparées par voie biologique, constitué d'un mélange de matières minérales, fabricable par mélange d'un liant de chaux et/ou de ciment avec un constituant réactif contenant du $SiO_2$ et, éventuellement, un agent moussant et/ou propulseur, avec éventuellement durcissement hydrothermal du mélange et broyage du produit durci, l'agent étant constitué essentiellement de gypse et d'un mélange de matières minérales, caractérisé en ce qu'il est constitué de grains de matière minérale qui sont recouverts d'une enveloppe de gypse.

2. Agent selon la revendication 1, caractérisé en ce que les grains de matière minérale présentent une dimension comprise dans le domaine de 0,5 à 8 mm, avantageusement 1,5 à 6,0 mm, et l'enveloppe de gypse a une épaisseur comprise entre 0,1 et 0,5 mm.

3. Agent selon les revendications 1 et/ou 2, caractérisé en ce que les grains de matière minérale présentent des micropores et des macropores.

4. Agent selon l'une des revendications 1 à 3, caractérisé en ce que la couche de gypse contient un colorant et/ou un indicateur et/ou un inhibiteur d'odeur.

5. Procédé pour la fabrication d'un agent selon l'une des revendications 1 à 4, caractérisé en ce qu'un granulat broyé en matière minérale, avantageusement en béton-gaz, est humidifié avec de l'eau, de sorte qu'il contienne de 50 à 70% en poids d'eau, et ensuite est mélangé avec un hémihydrate de gypse sec pulvérulent, avantageusement un α-hémihydrate.

6. Procédé selon la revendication 5, caractérisé en ce que le mélange est effectué sur un plateau de nodulisation.

7. Procédé selon les revendications 5 et/ou 6, caractérisé en ce que l'on emploie des grains de matière minérale dans le domaine de dimensions de 0,5 à 8 mm.

8. Procédé selon l'une ou plusieurs des revendications 5 à 7, caractérisé en ce que l'hémihydrate est utilisé dans une proportion de 50 à 80% en poids, rapporté aux grains de matière minérale secs.

9. Procédé selon l'une ou plusieurs des revendications 5 à 8, caractérisé en ce que la nodulisation est poursuivie jusqu'à ce que les grains de matière minérale soient recouverts d'une couche de gypse de 0,1 à 0,5 mm.

10. Procédé selon l'une ou plusieurs des revendications 5 à 9, caractérisé en ce que l'on procède au séchage après l'opération de nodulisation.

11. Procédé selon l'une ou plusieurs des revendications 5 à 10, caractérisé en ce que le mélange est aspergé d'eau pendant l'opération de nodulisation.

12. Procédé selon la revendication 11, caractérisé en ce que l'on ajoute à l'eau d'aspersion un accélérateur de prise du gypse connu en soi.

13. Procédé selon l'une ou plusieurs des revendications 5 à 12, caractérisé en ce que l'on ajoute à la poudre de gypse et/ou à l'eau d'aspersion un colorant et/ou un indicateur et/ou d'autres inhibiteurs d'odeur.